# EUROPEAN PATENT SPECIFICATION

(11) **EP 3 623 703 B1**
(45) Date of publication and mention of the grant of the patent: **19.01.2022**
(21) Application number: 18425075.1
(22) Date of filing: 14.09.2018
(51) Int. Cl.: F23R 3/00, F23R 3/04

(54) **METALLIC HEAT-INSULATING TILE FOR A COMBUSTION CHAMBER OF A GAS TURBINE**
METALLISCHE WÄRMEISOLIERENDE KACHEL FÜR EINE BRENNKAMMER EINER GASTURBINE
TUILE THERMO-ISOLANTE MÉTALLIQUE POUR LA CHAMBRE DE COMBUSTION D'UNE TURBINE À GAZ

(43) Date of publication of application: 18.03.2020
(73) Proprietor: ANSALDO ENERGIA S.p.A., 16152 Genova (IT)
(72) Inventor: D'Oriano, Vera, 16127, Genova (IT); Licata, Daniele, 16164, Genova (IT); Pistone, Valerio, 16135, Genova (IT)
(74) Representative: Bernotti, Andrea

(56) References cited:
- EP-A1- 2 886 962
- EP-A2- 2 846 097
- WO-A1-2014/169127
- GB-A- 2 298 266

## Description

The present invention relates to a metallic heat-insulating tile for a combustion chamber of a gas turbine.

As known, the combustion chamber of gas turbines must be provided on the inside with a heat-insulating lining made of refractory material, because of the high temperatures which are developed during machine operation. The heat-insulating lining is generally formed by a plurality of refractory tiles arranged in continuous rows on the inner walls of the combustion chamber casing, so as to define an essentially continuous surface. In the toroidal type combustion chambers, the refractory tiles are arranged on circumferences about the rotor axis.

Particularly in toroidal combustion chambers, the assembly of the refractory tiles includes inserting and sliding the connection elements along circumferential guides.

Normally, indeed, the refractory tiles have grooves on opposite sides and are fixed to the casing by connection elements which couple to ribs defined by the grooves. In general, the connection elements for one side of the refractory tiles are inserted in guides on the casing and made to slide to the respective fastening positions. The refractory tile is then arranged in seat, with a side engaging the fastening elements. Further connection elements are inserted along the guides and made to slide to couple with the side of the tile which is still free.

Particular measures are thus needed for the last tile of each row.

According to a known solution, a metallic tile is used in each row, which has a through hole and is fixed to the casing for last by micro-cast screw inserted from the outside and engaged on a pack of pre-assembled springs. In this manner, it is not necessary to make the fastening elements slide and assembly may be used in relatively easy manner. Metallic tiles have lower resistance to thermal stress compared to refractory tiles and require a specific cooling system. This is normally accomplished by extracting a cooling flow of relatively fresh air from an intermediate stage of the gas turbine compressor and by guiding the cooling flow toward components under thermally critical conditions.

The cooling flow does not directly take part to power generation and therefore affects efficiency of the gas turbine engine. There is a general interest in reducing air consumption for the purpose of cooling, which is not met to a satisfactory extent by the currently available metallic heat-insulating tiles. This particularly applies to the most downstream row of heat-insulating tiles, which are often all made of metal and are configured to couple to the inlet of the expansion section of the gas turbine engine. In fact, an interface region of the combustion chamber and the expansion section is subject to hot gas ingestion even more than other parts of the heat shield of the combustion chamber of the gas turbine.

According to WO 2014/163127 A1, a metallic heat-insulating tile for a combustion chamber of a gas turbine engine comprises a shield plate having a first face to be exposed in use to hot gas flowing through a combustion chamber of a gas turbine engine, a second face opposite to the first face. The heat-insulating tile has an aft surface and an aft edge, between the first face of the shield plate and the aft surface, and an outer rim, extending from the shield plate in a direction opposite to the first face. The outer rim also has a first side portion, a second side portion, opposite to the first side portion, and an aft portion and a plurality of seal holes are provided in the outer rim. The first face of the shield plate is configured as a portion of a surface of revolution about a central axis. The seal holes include a plurality of side seal holes in the first side portion and in the second side portion of the outer rim and a plurality of aft seal holes in the aft portion of the outer rim, each side seal hole having a respective side hole axis and each aft seal hole having a respective aft hole axis.

Another example of a known heat-insulating tile is disclosed in GB 2 298 266 A.

It is thus an object of the present invention to provide a metallic heat-insulating tile for a combustion chamber of a gas turbine heat tiles module and a gas turbine combustion chamber which allow to overcome the limitations described.

According to the present invention, there is provided a metallic heat-insulating tile for a combustion chamber of a gas turbine engine according to claim 1.

Seal effect thus achieved is highly effective in preventing hot gas ingestion between adjacent tiles, and especially on sides of the tiles. As a consequence of the effectiveness in diverting and rejecting hot gas, the heat-insulating tile requires reduced seal airflow and contributes to improve efficiency and performance of gas turbine engines.

According to an aspect of the invention, the side seal holes have respective diameters between 1 mm and 5 mm.

According to an aspect of the invention, the first angles of the side seal holes in one of the first side portion and second side portion of the outer rim are between 0° and 15° and first angles of the side seal holes in the other one of the first side portion and second side portion of the outer rim are between 0° and -15°.

Further increase of seal effect is thus made available.

According to an aspect of the invention, the first angles of the side seal holes in one of the first side portion and second side portion of the outer rim are between 0° and 15° and first angles of the side seal holes in the other one of the first side portion and second side portion of the outer rim are between 0° and -15°.

According to an aspect of the invention, pairs of corresponding side seal holes respectively provided in the first side portion and in second side portion are arranged such that outlets thereof are at corresponding locations in a direction parallel to the central axis.

In this manner, opposite inclination and corresponding axial location of the side seal holes provide opposite seal actions in the gap between two adjacent tiles and separately concur to make seal action effective.

The configuration of the aft seal holes is especially effective in preventing ingestion of hot gas in gaps downstream of the tiles, such as at interface between the combustion chamber and the inlet of the expansion section of a gas turbine engine.

According to an aspect of the invention, the second face and the outer rim delimit a recess and the respective aft hole axes of the aft seal hole are inclined such that a fluid flowing from the recess to the outside through the aft seal hole is directed toward the central axis.

According to an aspect of the invention, the aft seal holes have respective diameters between 1 mm and 5 mm.

According to an aspect of the invention, the first concave region is delimited by the aft edge and by the ridge and has a second radius of curvature, the second radius of curvature being preferably between 20 mm and 30 mm.

According to an aspect of the invention, the first side portion and the second side portion of the outer rim have respective lateral projections and recesses alternated in a direction parallel to the central axis, the lateral projections and recesses being configured such that, when the heat-insulating tile and another identical the heat-insulating tile are arranged side by side, the alternate lateral projections and recesses of the heat-insulating tile engage the alternate lateral projections and recesses of the other heat-insulating tile.

Lateral projections and recesses in the side portions of the outer rim further concur to improve seal action by forming a labyrinth gap between adjacent tiles.

According to an aspect of the invention, a gas turbine engine comprises an annular combustion chamber provided with a heat shield, wherein the heat shield comprises at least one heat-insulating tile according as defined above and the combustion chamber extends about the central axis.

According to an aspect of the invention, the gas turbine engine comprises an expansion section having an inlet vane stage configured to receive hot gas flowing from the combustion chamber, wherein the heat shield comprises a plurality of heat-insulating tiles as defined above arranged about the central axis to form an outlet row at an interface with the inlet vane stage of the expansion section.

According to an aspect of the invention, the outlet row of the heat shield and the inlet vane stage of the expansion section are axially separated by an annular gap, the heat-insulating tiles have respective aft edges that axially protrude toward the inlet vane stage of the expansion section, thereby partly closing the gap, and the aft seal holes face the gap.

Due to the shape of the aft edges of the heat-insulating tiles, the space that requires protection from hot gas ingestion is reduced, especially at the interface of the combustion chamber and the expansion section of the gas turbine engine. Thus, the need for seal air is reduced.

According to an aspect of the invention, the gas turbine engine comprises an air plenum around the combustion chamber, wherein the combustion chamber comprises a shell to which the heat-shield tiles are fixed, and wherein cooling chambers are defined between the shell, the second face and the outer rim of respective heat-shield tiles, the cooling chambers being fluidly coupled to the air plenum through feed holes in the shell.

According to an aspect of the invention, a sealing layer is provided between the outer rim of each heat-insulating tile and the shell of the combustion chamber, the sealing layer being for example defined by a ceramic matrix layer.

The present invention will now be described with reference to the accompanying drawings, which illustrate some non-limitative embodiments thereof, in which:
- figure 1 is a cross-sectional side view of a gas turbine engine cut along a longitudinal axial plane;
- figure 2 is an enlarged cross-sectional side view of a combustor of the gas turbine engine of figure 1 cut along a longitudinal axial plane;
- figure 3 is an enlarged cross-sectional of an interface of the combustor and an expansion section of the gas turbine engine of figure 1 cut along a longitudinal axial plane and including a heat-insulating tile in accordance with an embodiment of the present invention;
- figure 4 shows an enlarged detail of the interface of figure 3;
- figure 5 is a rear (aft) view of the heat-insulating tile of figure 3;
- figure 6 is a bottom view of the heat-insulating tile of figure 3, the visible portion being oriented toward the outside of the combustor;
- figure 7 is a perspective view of the heat-insulating tile of figure 3;
- figure 8 is a perspective view of a detail of a shell of the combustor of figure 2;
- figure 9 schematically shows quantities relating to the heat-insulating tile of figure 3;
- figure 10 shows part of the detail of figure 4, further enlarged;
- figure 11 is a bottom view of the heat-insulating tile in accordance with another embodiment of the present invention; and
- figure 12 is a side view of the heat-insulating tile of figure 11.

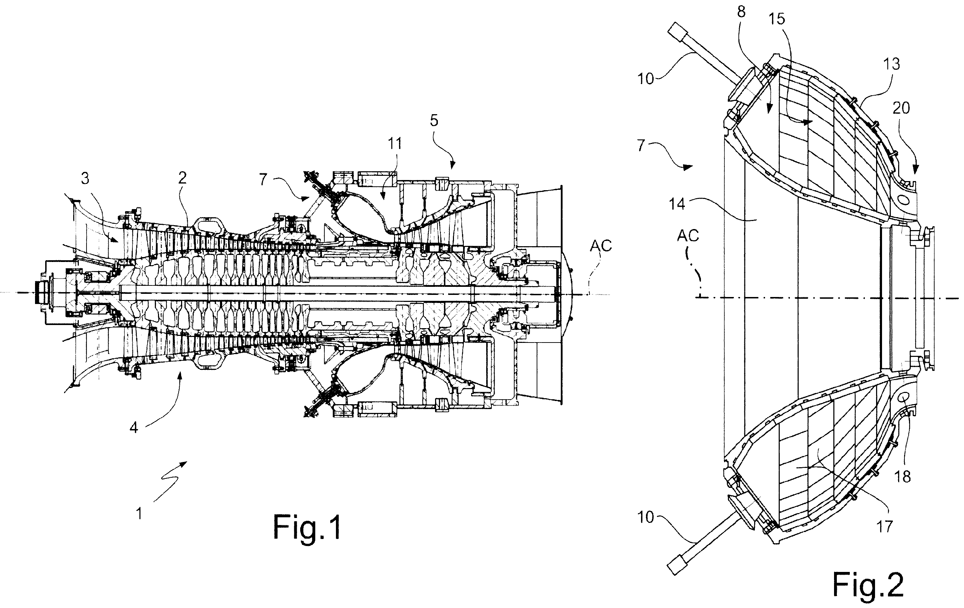

Figure 1 illustrates as a whole a gas turbine engine 1 of a power plant.

The gas turbine engine 1 comprises a casing 2 and a rotor 3 rotatably mounted in the casing 2. The casing 2 and the rotor 3 extend along a central axis AC and form a compressor 4 and a turbine or expansion section 5. A combustor 7 is provided between the compressor 4 and the expansion section 5 and comprises an annular combustion chamber 8, which extends about the central axis AC as well, and a plurality of burners 10.

An air plenum 11 is provided around the combustor 7 for supply of air for combustion, of cooling air and of seal air.

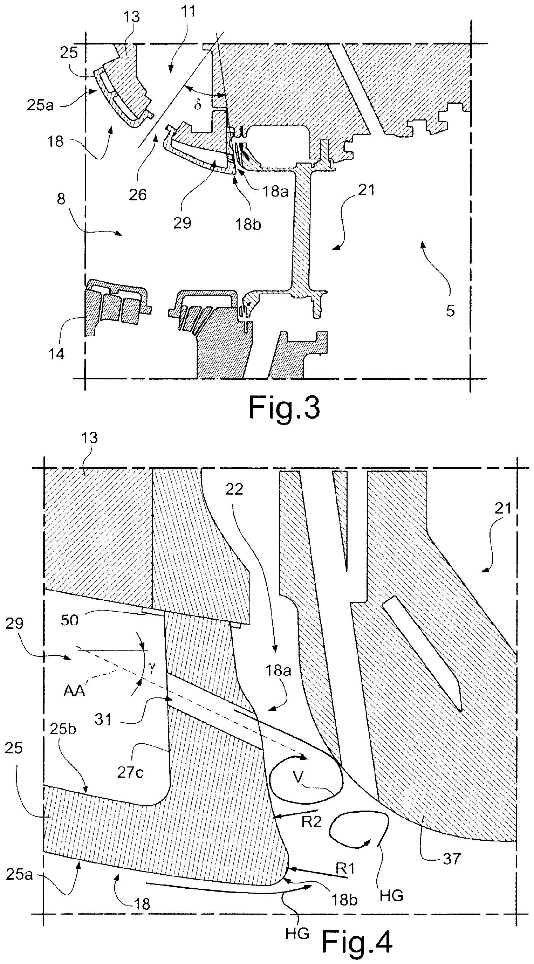

As illustrated in figure 2, the combustion chamber 8 comprises a toroidal casing extending about the central axis AC and including a first radially outer shell 13 and a second radially inner shell 14. The combustion chamber 8 is provided with a heat shield 15 which covers surfaces of the first shell 13 and the second shell 14 in use exposed to hot gas and comprises a plurality of refractory heat-insulating tiles 17 and a plurality of metallic heat-insulating tiles 18. The refractory heat-insulating tiles 17 and the metallic heat-insulating tiles 18 are all fixed either to the first shell 13 or to the second shell 14. The refractory heat-insulating tiles 17 are arranged in a plurality of annular rows. An outlet row 20 at an interface between the combustion chamber 8 and the expansion section 5 (see also figure 3) is formed by the metallic heat-insulating tiles 18.

Figures 3 an 4 shows in greater detail the interface between the combustion chamber 8 and an inlet vane stage 21 of the expansion section 5 of the gas turbine engine 1, which is configured to receive hot gas flowing from the combustion chamber 8. In one embodiment, the outlet row 20 of metallic heat-insulating tiles 18 is separated by an annular gap 22 from the inlet vane stage 21.

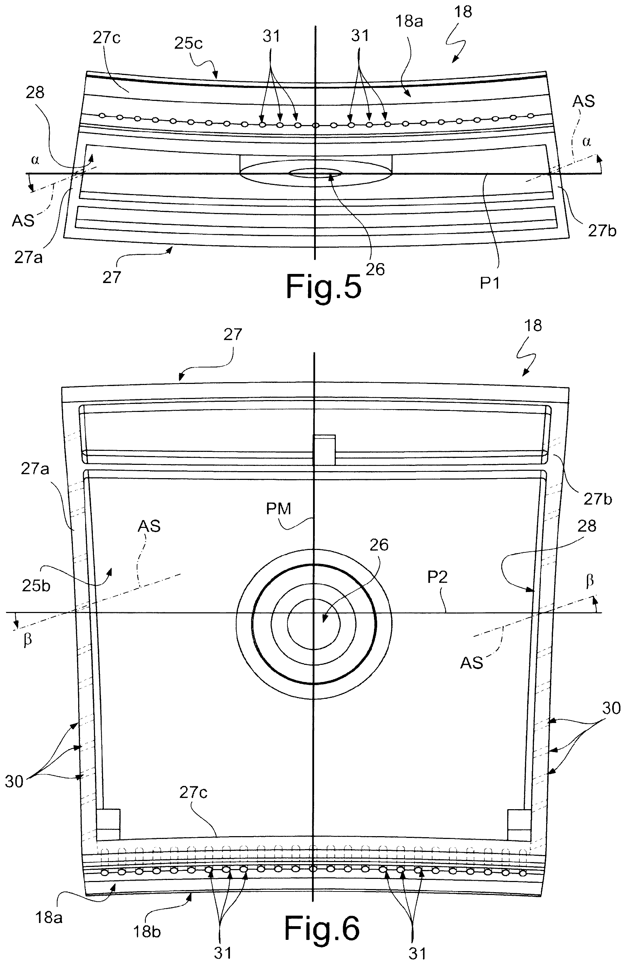

One of the metallic heat-insulating tiles 18 is illustrated in figures 5-7; it is understood that all the other metallic heat-insulating tiles 18 of the outlet row 20 have the same structure.

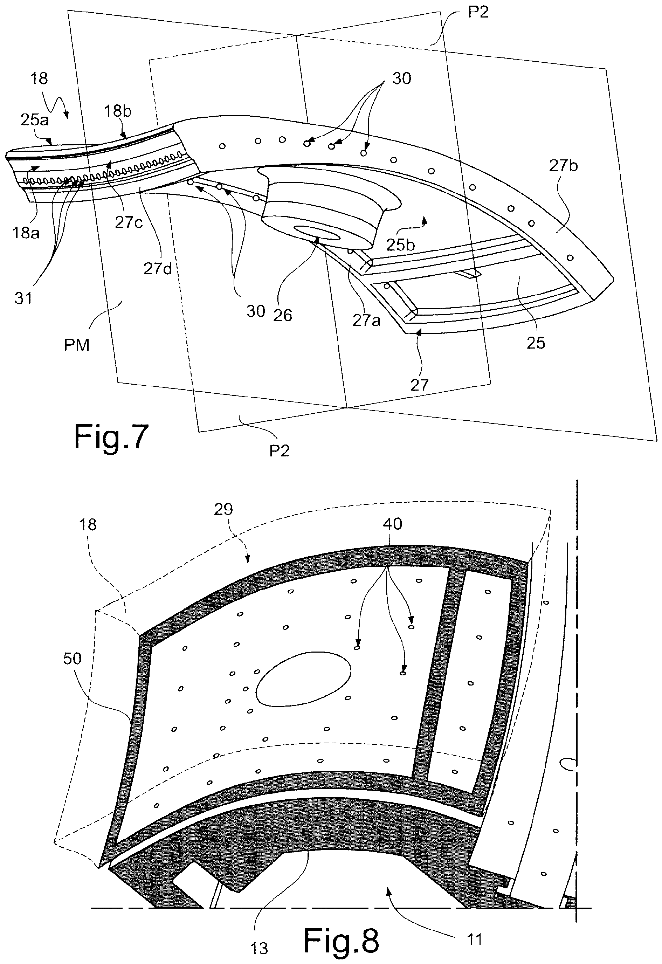

The heat-insulating tile 18 comprises a shield plate 25, having a hot face 25a to be exposed in use to hot gas flowing through the combustion chamber 8 and a cold face 25b opposite to the hot face 25a. Moreover, the heat-insulating tile 18 has an aft face 18a, arranged downstream with respect to a direction of the hot gas flow and an aft edge 18b, between the hot face 25a and the aft face 18a. A central hole 26 through the shield plate 25 allows insertion of a screw (not shown) for fixing the heat-insulating tile 18 to the first shell 13 in a known manner. Except for surface features such as the central hole 26, the hot face 25a of the shield plate 25 is configured substantially as a portion of a surface of revolution about a central axis, that coincides with the central axis AC of the gas turbine engine 1 when the heat-insulating tile 18 is fitted to the first shell 13. The heat-insulating tile 18 also comprises an outer rim 27, that extends from the shield plate 25 in a direction opposite to the hot face 25a and delimits a recess 28 together with the cold face 25b. The outer rim 27 has a first side portion 27a, a second side portion 27b, opposite to the first side portion 27a, and an aft portion 27c, which defines at least in part the aft surface 18a of the heat-insulating tile 18. Accordingly, cooling chambers 29 are defined between the fist shell 13, the cold face 25b and the outer rim 27 of respective heat-shield tiles 18. The cooling chambers 29 are fluidly coupled to the air plenum 11 through feed holes 40 in the first shell 13 as shown in figures 3 and 8. Moreover, a sealing layer 50 is provided between the outer rim 27 of each heat-insulting tile 18 and the first shell 13 of the combustion chamber 8. The sealing layer 50 may be defined for example by a ceramic matrix layer capable of withstanding temperatures as high as 800°C at least, and may have the same contour as the outer rim 27, e.g. with a thickness of 0.5-1.5 mm.

A plurality of seal holes is provided in the outer rim 27. Specifically, the seal holes include a plurality of side seal holes 30 in the first side portion 27a and in the second side portion 27b of the outer rim 27 and a plurality of aft seal holes 31 in the aft portion 27c of the outer rim 27. The side seal holes 30 and the aft seal holes 31 define passages to feed seal air from the cooling chamber 29 to the outside around the heat-insulating tile 18, that is, inlets of the side seal holes 30 and the aft seal holes 31 are in the cooling chamber 29.

Pairs of corresponding side seal holes 30 respectively provided in the first side portion 27a and in second side portion 27b are arranged such that outlets thereof are at corresponding locations in a direction parallel to the central axis A. So, outlets of the side seal holes 30 of adjacent heat-insulating tiles 18 are set facing one another.

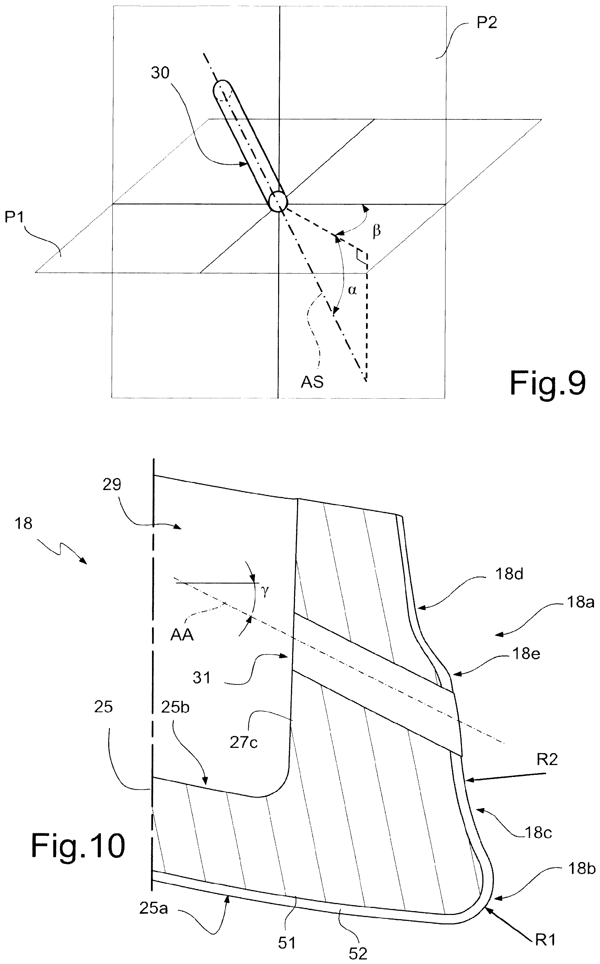

Each side seal hole 30 has a respective side hole axis AS forming a first angle α of ± 15° with a first reference plane P1, as also shown in figure 9. The first reference plane P1 is parallel to the central axis AC and perpendicular to a median plane PM of the hot face 25a of the shield plate 25 that includes the central axis AC. A projection of the side hole axis AS on the first reference plane P1 forms a second angle β of ± 30° with a second reference plane P2 perpendicular to the central axis AC. In one embodiment, the side seal holes 30 have respective diameters between 1 mm and 5 mm. As herein understood, first angles α are positive, when inlets of the side seal holes 30 are nearer to the shield plate 25 than the outlets (figure 5, left side), and negative when the inlets of the side seal holes 30 are farther from the shield plate 25 than the outlets (figure 5, right side). Second angles β are positive, respectively negative, when inlets of the side seal holes 30 are nearer to (figure 6, left side), respectively farther from (figure 6, left side), the aft portion 27c of the outer rim 27 than the outlets.

In one embodiment (figure 6), the side seal holes 30 of the first side portion 27a of the outer rim 27 have opposite sense of inclination with respect to the side seal holes 30 of the second side portion 27b. In other words, the first angles α of the side seal holes 30 in one of the first side portion 27a and second side portion 27b of the outer rim 27 are between 0° and 15° and the first angles α of the side seal holes 30 in the other one of the first side portion 27a and second side portion 27b are between 0° and -15°or all between 0° and -15°.

The second angles β of the side seal holes 30 in one of the first side portion 27a and second side portion 27b of the outer rim 27 are between 0° and 30° and the second angles β of the side seal holes 30 in the other one of the first side portion 27a and second side portion 27b of the outer rim 27 are between 0° and -30°.

Side seal holes 30 configured as described above are extremely effective in sealing spaces between adjacent tiles and thus preventing hot gas ingestion therethrough. In fact, the side seal holes 30 feed inclined jets of seal air into the spaces between adjacent tiles. The jets of seal air mutually interact and create a circulation that avoids passage of hot gas from the combustion chamber 8 toward the first shell 13. Improved protection from heat and reduced consumption of air are thus achieved.

The aft seal holes 31 are arranged to face the gap 22 (figures 3 and 4), so that seal air flowing from the recess 28 out of the aft seal holes 31 is fed into the gap. Each aft seal hole 31 has a respective aft hole axis AA forming a third angle γ between 5° and 45° with a direction parallel to the central axis AC. More precisely, the aft hole axes AA of the aft seal holes 31 are inclined such that seal air flowing from the recess 28 to the outside through the aft seal holes 31 is directed toward the central axis AC. Also the aft seal holes 31 have respective diameters between 1 mm and 5 mm.

Due to the inclination of the aft seal holes 31, jets of seal air are directed across the gap 22, reach an outer platform 37 of the inlet vane stage 21 and are deviated toward the heat-insulating tiles 18, thus creating vortices V in the gap 22 that prevent ingestion of hot gas possibly approaching the gap 22, as illustrated in figure 4.

The aft edge 18b of the heat-insulating tile 18 axially protrudes toward the inlet vane stage 21 of the expansion section 5 and partly closes the gap 22. Moreover, the aft edge 18b has a first curvature radius R1 below a threshold radius and preferably between 1 mm and 3 mm. Specifically, the curvature radius R is small enough to ensure that gas HG flowing from the combustion chamber 8 detaches from the heat insulating tiles 18 at the aft edge 18b and prevents deviation of hot gas HG into the gap 22 by Coanda effect at least at base load operating conditions and preferably in a load range from minimum environmental load to base load.

As illustrated in figure 10, the aft surface 18a of the heat-insulating tile 18 has a first concave region 18c and a second concave region 18d, separated by a ridge 18e. The first concave region 18c, the second concave region 18d and the ridge 18e extend parallel to the aft edge 18b between the first side portion 27a and the second side portion 27b of the outer rim 27. The first concave region 18c is delimited by the aft edge 18b and by the ridge 18e and has a second radius of curvature R2 between 20 mm and 30 mm. The second concave 18d region is delimited on one side by the ridge 18e and takes the remaining portion of the aft surface 18a of the heat-insulating tile 18. A plane tangent to the ridge 18e forms an angle δ of 35°-45° with an axis of the central hole 26 of the shield plate 25 (see figure 3) .

The shape of the aft surface 18a of the heat-insulating tile 18 helps energize the vortices V and thus improves sealing of the gap 22 against hot gas ingestion.

The aft surface 18a of the heat-insulating tile 18, as well as the hot face 25a of the shield plate 25, may be provided with a thermal barrier coating 55. A bond layer 56 may be provided to improve adhesion of the thermal barrier coating 55.

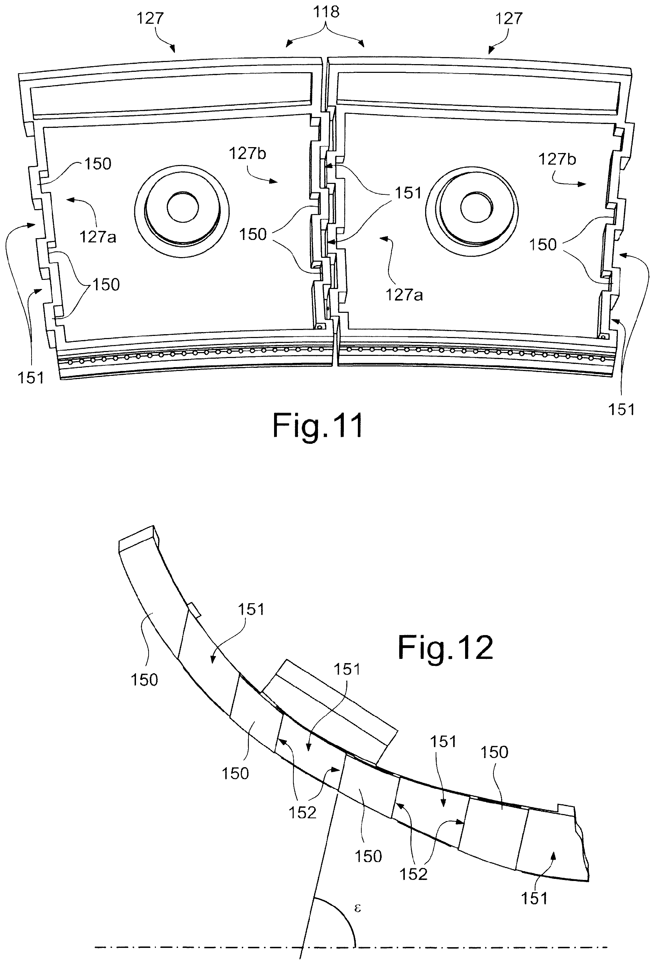

Figures 11 and 12 show an embodiment of the heat-insulating tile, here designated by numeral 118, which the same general structure as the heat-insulating tile 18 of figures 3-8, except in that the first side portion 127a and the second side portion 127b of the outer rim 127 have respective lateral projections 150 and recesses 151 alternated in a direction parallel to the central axis (here not shown) . The lateral projections 150 and recesses 151 are configured such that, when identical heat-insulating tiles 118 are arranged side by side, the alternate lateral projections 150 and recesses 151 of adjacent heat-insulating tile 118 engage with one another. The shape of the sides of the heat-insulating tiles 118 creates a labyrinth that contributes to sealing effect, thus further reducing the need for sealing air. To favor mounting and coupling of adjacent heat-insulating tiles 18, flanks 152 of the lateral projections 150 and recesses 151 form angles ε between 60° and 90° with a direction parallel to the central axis AC.

It is finally apparent that changes and variations may be made to the described heat-insulating tile described and illustrated without departing from the scope of protection of the accompanying claims.

In particular, use of the heat-insulating according to the invention is not limited to the last row at the outlet of the combustion chamber. It is instead understood that the described heat-insulating tiles may well serve to form intermediate rows of the heat shield upstream of the interface with the expansion section of the gas turbine engine. By way of example, a row of heat-insulating tiles in accordance with the invention may be provided adjacent to the last row. The last row in this case may be of any conventional type. Moreover, the described heat-insulating tiles may be used as closing tiles in any of the upstream rows. Mounting the last tile in row of the heat shield usually requires special mounting procedure and means. Also special tiles are often needed. Metallic tiles are particularly fit to the purpose, because greater flexibility in manufacturing (e.g. in the shape) is allowed. So, heat-insulating tile as described above may serve as closing tiles to improve efficiency and/or provide more reliable protection against adverse effects of hot gas.

## Claims

1. A metallic heat-insulating tile for a combustion chamber of a gas turbine engine, the heat-insulating tile comprising:
a shield plate (25), having a first face (25a) to be exposed in use to hot gas flowing through a combustion chamber (8) of a gas turbine engine (1), a second face (25b) opposite to the first face (25a);
an aft surface (18a) and an aft edge (18b) between the first face (25a) of the shield plate (25) and the aft surface (18a);
an outer rim (27), extending from the shield plate (25) in a direction opposite to the first face (25a) thereof and having a first side portion (27a), a second side portion (27b), opposite to the first side portion (27a), and an aft portion (27c);
a plurality of seal holes (30, 31) in the outer rim (27);
wherein:
the first face (25a) of the shield plate (25) is configured as a portion of a surface of revolution about a central axis (AC); and
the seal holes (30, 31) include a plurality of side seal holes (30) in the first side portion (27a) and in the second side portion (27b) of the outer rim (27) and a plurality of aft seal holes (31) in the aft portion (27c) of the outer rim (27), each side seal hole (30) having a respective side hole axis (AS) and each aft seal hole (31) having a respective aft hole axis (AA);
**characterized in that**:
for each side seal hole (30), the respective side hole axis (AS) forms a first angle (α) of ± 15° with a first reference plane (P1) and a projection of the respective side hole axis (AS) on the first reference plane (P1) forms a second angle (β) of ± 30° with a second reference plane (P2) perpendicular to the central axis (AC) ;
the aft hole axes (AA) of the aft seal holes (31) form respective third angles (y) between 5° and 45° with a direction parallel to the central axis (AC);
the first reference plane (P1) is parallel to the central axis (AC) and perpendicular to a median plane (PM) of the first face (25a) of the shield plate (25) that includes the central axis (AC);
the aft edge (18b) is rounded with first curvature radius (R1) and the aft surface (18a) of the heat-insulating tile has a first concave region (18c) and a second concave region (18d), separated by a ridge (18e), all extending parallel to the aft edge (18b) between the first side portion (27a) and the second side portion (27b) of the outer rim (27).

2. The heat-insulating tile according to claim 1, wherein the side seal holes (30) have respective diameters between 1 mm and 5 mm.

3. The heat-insulating tile according to claim 1 or 2, wherein the first angles (α) of the side seal holes (30) in one of the first side portion (27a) and second side portion (27b) of the outer rim (27) are between 0° and 15° and the first angles (α) of the side seal holes (30) in the other one of the first side portion (27a) and second side portion (27b) of the outer rim (27) are between 0° and -15°.

4. The heat-insulating tile according to any one of the preceding claims, wherein the second angles (β) of the side seal holes (30) in one of the first side portion (27a) and second side portion (27b) of the outer rim (27) are between 0° and 30° and the second angles (β) of the side seal holes (30) in the other one of the first side portion (27a) and second side portion (27b) of the outer rim (27) are between 0° and -30°.

5. The heat-insulating tile according to any one of the preceding claims, wherein pairs of corresponding side seal holes (30) respectively provided in the first side portion (27a) and in second side portion (27b) are arranged such that outlets thereof are at corresponding locations in a direction parallel to the central axis (AC).

6. The heat-insulating tile according to any one of the preceding claims,
wherein the second face (25b) and the outer rim (27) delimit a recess (29) and the respective aft hole axes (AA) of the aft seal holes (31) are inclined such that a fluid flowing from the recess (29) to the outside through the aft seal holes (31) is directed toward the central axis (AC).

7. The heat-insulating tile according to any one of the preceding claims, wherein the aft seal holes (31) have respective diameters between 1 mm and 5 mm.

8. The heat-insulating tile according to any one of the preceding claims, wherein the first concave region (18c) is delimited by the aft edge (18b) and by the ridge (18e) and has a second radius of curvature (R2), the second radius of curvature (R2) being preferably between 20 mm and 30 mm.

9. The heat-insulating tile according to any one of the preceding claims, wherein the first side portion (127a) and the second side portion (127b) of the outer rim (127) have respective lateral projections (150) and recesses (151) alternated in a direction parallel to the central axis (AC), the lateral projections (150) and recesses (151) being configured such that, when the heat-insulating tile and another identical the heat-insulating tile are arranged side by side, the alternate lateral projections (150) and recesses (151) of the heat-insulating tile engage the alternate lateral projections (150) and recesses (151) of the other heat-insulating tile.

10. A gas turbine engine comprising an annular combustion chamber (8) provided with a heat shield (15), wherein the heat shield (15) comprises at least one heat-insulating tile (18; 118) according to any one of the preceding claims and the combustion chamber (8) extends about the central axis (AC).

11. The gas turbine engine according to claim 10, comprising an expansion section (5) having an inlet vane stage (21) configured to receive hot gas flowing from the combustion chamber (8), wherein the heat shield (15) comprises a plurality of heat-insulating tiles according to any one of claims 1 to 9 arranged about the central axis (AC) to form an outlet row at an interface with the inlet vane stage (21) of the expansion section.

12. The gas turbine engine according to claim 11, wherein the outlet row of the heat shield (15) and the inlet vane stage (21) of the expansion section are axially separated by an annular gap (22) the aft edges (18b) of the heat-insulating tiles (18) axially protrude toward the inlet vane stage (21) of the expansion section, thereby partly closing the gap (22), and the aft seal holes (31) face the gap (22).

13. The gas turbine engine according to claim 10, wherein the first curvature radius (R1) of the aft edges (18b) of heat-insulating tiles (18; 118) is below a threshold radius such that the first curvature radius (R1) prevents deviation into the gap (22) by Coanda effect of hot gas (HG) flowing from the combustion chamber (8) at least at base load operating conditions.

## Patentansprüche

1. Metallische wärmeisolierende Kachel für eine Brennkammer einer Gasturbinenmaschine, wobei die wärmeisolierende Kachel umfasst:
eine Abschirmplatte (25) mit einer ersten Fläche (25a), die im Betrieb heißem Gas ausgesetzt wird, das durch eine Brennkammer (8) einer Gasturbinenmaschine (1) strömt, und einer zweiten Fläche (25b), die der ersten Fläche (25a) gegenüberliegt;
eine hintere Fläche (18a) und eine hintere Kante (18b) zwischen der ersten Fläche (25a) der Abschirmplatte (25) und der hinteren Fläche (18a);
einen äußeren Rand (27), der sich von der Abschirmplatte (25) in einer Richtung entgegengesetzt zu der ersten Fläche (25a) derselben erstreckt und einen ersten Seitenabschnitt (27a), einen zweiten Seitenabschnitt (27b) gegenüberliegend zu dem ersten Seitenabschnitt (27a) und einen hinteren Abschnitt (27c) aufweist;
mehrere Dichtungslöcher (30, 31) in dem äußeren Rand (27);
wobei:
die erste Fläche (25a) der Abschirmplatte (25) als ein Abschnitt einer Rotationsfläche um eine zentrale Achse (AC) konfiguriert ist; und
die Dichtungslöcher (30, 31) mehrere seitliche Dichtungslöcher (30) in dem ersten Seitenabschnitt (27a) und in dem zweiten Seitenabschnitt (27b) des äußeren Randes (27) und mehrere hintere Dichtungslöcher (31) in dem hinteren Abschnitt (27c) des äußeren Randes (27) umfassen, wobei jedes seitliche Dichtungsloch (30) eine jeweilige Seitenlochachse (AS) und jedes hintere Dichtungsloch (31) eine jeweilige Hinterlochachse (AA) aufweist;
**dadurch gekennzeichnet, dass**:
für jedes seitliche Dichtungsloch (30) die jeweilige Seitenlochachse (AS) einen ersten Winkel (α) von ±15° mit einer ersten Bezugsebene (P1) bildet und eine Projektion der jeweiligen Seitenlochachse (AS) auf die erste Bezugsebene (P1) einen zweiten Winkel (β) von ±30° mit einer zweiten Bezugsebene (P2) senkrecht zu der Mittelachse (AC) bildet;
die Hinterlochachsen (AA) der hinteren Dichtungslöcher (31) jeweils einen dritten Winkel (γ) zwischen 5° und 45° mit einer Richtung parallel zu der Mittelachse (AC) bilden;
die erste Bezugsebene (P1) parallel zu der Mittelachse (AC) und senkrecht zu einer Medianebene (PM) der ersten Fläche (25a) der Abschirmplatte (25), die die Mittelachse (AC) enthält, ist;
die hintere Kante (18b) mit einem ersten Krümmungsradius (R1) abgerundet ist und die hintere Oberfläche (18a) der wärmeisolierenden Kachel einen ersten konkaven Bereich (18c) und einen zweiten konkaven Bereich (18d) aufweist, die durch einen Steg (18e) getrennt sind und sich alle parallel zu der hinteren Kante (18b) zwischen dem ersten Seitenabschnitt (27a) und dem zweiten Seitenabschnitt (27b) des äußeren Randes (27) erstrecken.

2. Wärmeisolierende Kachel nach Anspruch 1, wobei die seitlichen Dichtungslöcher (30) jeweils einen Durchmesser zwischen 1 mm und 5 mm aufweisen.

3. Wärmeisolierende Kachel nach Anspruch 1 oder 2, wobei die ersten Winkel (α) der seitlichen Dichtungslöcher (30) in einem von dem ersten Seitenabschnitt (27a) und dem zweiten Seitenabschnitt (27b) des äußeren Randes (27) zwischen 0° und 15° betragen, und die ersten Winkel (α) der seitlichen Dichtungslöcher (30) in dem anderen von dem ersten Seitenabschnitt (27a) und dem zweiten Seitenabschnitt (27b) des äußeren Randes (27) zwischen 0° und -15° betragen.

4. Wärmeisolierende Kachel nach einem der vorangehenden Ansprüche, wobei die zweiten Winkel (β) der seitlichen Dichtungslöcher (30) in einem von dem ersten Seitenabschnitt (27a) und dem zweiten Seitenabschnitt (27b) des äußeren Randes (27) zwischen 0° und 30° betragen, und die zweiten Winkel (β) der seitlichen Dichtungslöcher (30) in dem anderen von dem ersten Seitenabschnitt (27a) und dem zweiten Seitenabschnitt (27b) des äußeren Randes (27) zwischen 0° und -30° betragen.

5. Wärmeisolierende Kachel nach einem der vorangehenden Ansprüche, wobei Paare von entsprechenden seitlichen Dichtungslöchern (30), die jeweils in dem ersten Seitenabschnitt (27a) und in dem zweiten Seitenabschnitt (27b) vorgesehen sind, so angeordnet sind, dass ihre Auslässe an entsprechenden Stellen in einer Richtung parallel zu der Mittelachse (AC) liegen.

6. Wärmeisolierende Kachel nach einem der vorangehenden Ansprüche, wobei die zweite Fläche (25b) und der äußere Rand (27) eine Ausnehmung (29) begrenzen und die jeweiligen Hinterlochachsen (AA) der hinteren Dichtungslöcher (31) so geneigt sind, dass ein Fluid, das von der Ausnehmung (29) durch die hinteren Dichtungslöcher (31) nach außen strömt, in Richtung zu der Mittelachse (AC) gerichtet ist.

7. Wärmeisolierende Kachel nach einem der vorangehenden Ansprüche, wobei die hinteren Dichtungslöcher (31) jeweils einen Durchmesser zwischen 1 mm und 5 mm aufweisen.

8. Wärmeisolierende Kachel nach einem der vorangehenden Ansprüche, wobei der erste konkave Bereich (18c) durch die hintere Kante (18b) und den Steg (18e) begrenzt ist und einen zweiten Krümmungsradius (R2) aufweist, wobei der zweite Krümmungsradius (R2) vorzugsweise zwischen 20 mm und 30 mm beträgt.

9. Wärmeisolierende Kachel nach einem der vorangehenden Ansprüche, wobei der erste Seitenabschnitt (127a) und der zweite Seitenabschnitt (127b) des äußeren Randes (127) jeweils seitliche Vorsprünge (150) und Ausnehmungen (151) aufweisen, die sich in einer Richtung parallel zu der Mittelachse (AC) abwechseln, wobei die seitlichen Vorsprünge (150) und Ausnehmungen (151) so konfiguriert sind, dass dann, wenn die wärmeisolierende Kachel und eine weitere identische wärmeisolierende Kachel nebeneinander angeordnet sind, die abwechselnden lateralen Vorsprünge (150) und Ausnehmungen (151) der wärmeisolierenden Kachel mit den abwechselnden lateralen Vorsprünge (150) und Ausnehmungen (151) der weiteren wärmeisolierenden Kachel in Eingriff gelangen.

10. Gasturbinenmaschine mit einer ringförmigen Brennkammer (8), die mit einem Hitzeschild (15) versehen ist, wobei der Hitzeschild (15) wenigstens eine wärmeisolierende Kachel (18; 118) nach einem der vorangehenden Ansprüche umfasst, und wobei sich die Brennkammer (8) um die Mittelachse (AC) erstreckt.

11. Gasturbinenmaschine nach Anspruch 10, einen Expansionsabschnitt (5) mit einer Einlassschaufelstufe (21) umfassend, die dazu konfiguriert ist, heißes Gas aufzunehmen, das aus der Brennkammer (8) strömt, wobei der Hitzeschild (15) mehrere wärmeisolierende Kacheln nach einem der Ansprüche 1 bis 9 umfasst, die um die Mittelachse (AC) herum angeordnet sind, um eine Auslassreihe an einer Übergangsstelle zu der Einlassschaufelstufe (21) des Expansionsabschnitts zu bilden.

12. Gasturbinenmaschine nach Anspruch 11, wobei die Auslassreihe des Hitzeschilds (15) und die Einlassschaufelstufe (21) des Expansionsabschnitts durch einen ringförmigen Spalt (22) axial getrennt sind und die hinteren Kanten (18b) der wärmeisolierenden Kacheln (18) in Richtung zu der Einlassschaufelstufe (21) des Expansionsabschnitts axial vorstehen, wodurch der Spalt (22) teilweise verschlossen wird, und die hinteren Dichtungslöcher (31) dem Spalt (22) zugewandt sind.

13. Gasturbinenmaschine nach Anspruch 10, wobei der erste Krümmungsradius (R1) der hinteren Kanten (18b) der wärmeisolierenden Kacheln (18; 118) unterhalb eines Schwellenwertradius liegt, so dass der erste Krümmungsradius (R1) ein Abweichen in den Spalt (22) durch den Coanda-Effekt des aus der Brennkammer (8) strömenden Heißgases (HG) zumindest bei Grundlastbetriebsbedingungen verhindert.

## Revendications

1. Tuile thermo-isolante métallique pour une chambre de combustion d'un moteur à turbine à gaz, la tuile thermo-isolante comprenant :
une plaque de blindage (25), ayant une première face (25a) devant être exposée en utilisation à du gaz chaud s'écoulant à travers une chambre de combustion (8) d'un moteur à turbine à gaz (1), une seconde face (25b) opposée à la première face (25a) ;
une surface arrière (18a) et un bord arrière (18b) entre la première face (25a) de la plaque de blindage (25) et la surface arrière (18a) ;
un rebord externe (27), s'étendant à partir de la plaque de blindage (25) dans une direction opposée à la première face (25a) de celle-ci et ayant une première partie latérale (27a), une seconde partie latérale (27b), opposée à la première partie latérale (27a), et une partie arrière (27c) ;
une pluralité de trous d'étanchéité (30, 31) dans le rebord externe (27) ;
dans laquelle :
la première face (25a) de la plaque de blindage (25) est configurée en tant que partie d'une surface de révolution autour d'un axe central (AC) ; et
les trous d'étanchéité (30, 31) incluent une pluralité de trous d'étanchéité latéraux (30) dans la première partie latérale (27a) et dans la seconde partie latérale (27b) du rebord externe (27) et une pluralité de trous d'étanchéité arrière (31) dans la partie arrière (27c) du rebord externe (27), chaque trou d'étanchéité latérale (30) ayant un axe de trou latéral (AS) respectif et chaque trou d'étanchéité arrière (31) ayant un axe de trou arrière (AA) respectif ;
**caractérisée en ce que** :
pour chaque trou d'étanchéité latéral (30), l'axe de trou latéral (AS) respectif forme un premier angle (α) de ± 15° avec un premier plan de référence (P1) et une saillie de l'axe de trou latéral (AS) respectif sur le premier plan de référence (P1) forme un deuxième angle (β) de ± 30° avec un second plan de référence (P2) perpendiculaire à l'axe central (AC) ;
les axes de trou arrière (AA) des trous d'étanchéité arrière (31) forment des troisièmes angles (y) respectifs entre 5° et 45° avec une direction parallèle à l'axe central (AC) ;
le premier plan de référence (P1) est parallèle à l'axe central (AC) et perpendiculaire à un plan médian (PM) de la première face (25a) de la plaque de blindage (25) qui inclut l'axe central (AC) ;
le bord arrière (18b) est arrondi avec un premier rayon de courbure (R1) et la surface arrière (18a) de la tuile thermo-isolante a une première région concave (18c) et une seconde région concave (18d), séparées par une arête (18e), toutes s'étendant parallèlement au bord arrière (18b) entre la première partie latérale (27a) et la seconde partie latérale (27b) du rebord externe (27).

2. Tuile thermo-isolante selon la revendication 1, dans laquelle les trous d'étanchéité latéraux (30) ont des diamètres respectifs compris entre 1 mm et 5 mm.

3. Tuile thermo-isolante selon la revendication 1 ou 2, dans laquelle les premiers angles (α) des trous d'étanchéité latéraux (30) dans l'une de la première partie latérale (27a) et de la seconde partie latérale (27b) du rebord externe (27) sont compris entre 0° et 15° et les premiers angles (α) des trous d'étanchéité latéraux (30) dans l'autre de la première partie latérale (27a) et de la seconde partie latérale (27b) du rebord externe (27) sont compris entre 0° et -15°.

4. Tuile thermo-isolante selon l'une quelconque des revendications précédentes, dans laquelle les seconds angles (β) des trous d'étanchéité latéraux (30) dans l'une de la première partie latérale (27a) et de la seconde partie latérale (27b) du rebord externe (27) sont compris entre 0° et 30° et les seconds angles (β) des trous d'étanchéité latéraux (30) dans l'autre de la première partie latérale (27a) et de la seconde partie latérale (27b) du rebord externe (27) sont compris entre 0° et -30°.

5. Tuile thermo-isolante selon l'une quelconque des revendications précédentes, dans laquelle des paires de trous d'étanchéité latéraux (30) correspondants prévus respectivement dans la première partie latérale (27a) et dans la seconde partie latérale (27b) sont configurées de telle sorte que les orifices de sortie de celles-ci sont au niveau d'emplacements correspondants dans une direction parallèle à l'axe central (AC).

6. Tuile thermo-isolante selon l'une quelconque des revendications précédentes, dans laquelle la seconde face (25b) et le rebord externe (27) délimitent un retrait (29) et les axes de trous arrière (AA) respectifs des trous d'étanchéité arrière (31) sont inclinés de telle sorte qu'un fluide s'écoulant à partir du retrait (29) vers l'extérieur à travers les trous d'étanchéité arrière (31) est dirigé vers l'axe central (AC).

7. Tuile thermo-isolante selon l'une quelconque des revendications précédentes,
dans laquelle les trous d'étanchéité arrière (31) ont des diamètres respectifs compris entre 1 mm et 5 mm.

8. Tuile thermo-isolante selon l'une quelconque des revendications précédentes, dans laquelle la première région concave (18c) est délimitée par le bord arrière (18b) et par l'arête (18e) et a un second rayon de courbure (R2), le second rayon de courbure (R2) étant de préférence compris entre 20 mm et 30 mm.

9. Tuile thermo-isolante selon l'une quelconque des revendications précédentes, dans laquelle la première partie latérale (127a) et la seconde partie latérale (127b) du rebord externe (127) ont des saillies (150) et des retraits (151) latéraux respectifs alternés dans une direction parallèle à l'axe central (AC), les saillies (150) et retraits (151) latéraux étant configurés de telle sorte que, lorsque la tuile thermo-isolante et une autre tuile thermo-isolante identiques sont disposées côte à côte, les saillies (150) et retraits (151) latéraux alternés de la tuile thermo-isolante se mettent en prise avec les saillies (150) et retraits (151) latéraux alternés de l'autre tuile thermo-isolante.

10. Moteur à turbine à gaz comprenant une chambre de combustion annulaire (8) dotée d'un protecteur thermique (15), dans lequel le protecteur thermique (15) comprend au moins une tuile thermo-isolante (18 ; 118) selon l'une quelconque des revendications précédentes et la chambre de combustion (8) s'étend autour de l'axe central (AC).

11. Moteur à turbine à gaz selon la revendication 10,
comprenant une section d'expansion (5) ayant un étage d'aubes d'entrée (21) configuré pour recevoir du gaz chaud s'écoulant à partir de la chambre de combustion (8), dans lequel le protecteur thermique (15) comprend une pluralité de tuiles thermo-isolantes selon l'une quelconque des revendications 1 à 9 disposées autour de l'axe central (AC) pour former une rangée d'orifices de sortie au niveau d'une interface avec l'étage d'aubes d'entrée (21) de la section d'expansion.

12. Moteur à turbine à gaz selon la revendication 11,
dans lequel la rangée d'orifices de sortie du protecteur thermique (15) et l'étage d'aubes d'entrée (21) de la section d'expansion sont séparés axialement par un espace annulaire (22), les bords arrière (18b) des tuiles thermo-isolantes (18) font saillie axialement vers l'étage d'aubes d'entrée (21) de la section d'expansion, fermant ainsi partiellement l'espace (22), et les trous d'étanchéité arrière (31) font face à l'espace (22).

13. Moteur à turbine à gaz selon la revendication 10, dans lequel le premier rayon de courbure (R1) des bords arrière (18b) de tuiles thermo-isolantes (18 ; 118) est en dessous d'un rayon seuil de sorte que le premier rayon de courbure (R1) empêche une déviation dans l'espace (22) par effet Coanda du gaz chaud (HG) s'écoulant à partir de la chambre de combustion (8) au moins dans des conditions d'exploitation en charge de base.
